# EUROPÄISCHE PATENTSCHRIFT

(11) **EP 2 716 716 B1**
(45) Veröffentlichungstag und Bekanntmachung des Hinweises auf die Patenterteilung: **18.04.2018**
(21) Anmeldenummer: 12186929.1
(22) Anmeldetag: 02.10.2012
(51) Int. Cl.: C08L 77/06, C08L 77/02, C08K 5/00

(54) **Polyamid-Formmassen und deren Verwendung bei der Herstellung von Formkörpern**
Polyamide moulding compositions and their use in the production of moulded articles
Compositions de moulage à base de polyamide et leur utilisation dans la fabrication d'objets moulés

(43) Veröffentlichungstag der Anmeldung: 09.04.2014
(73) Patentinhaber: EMS-PATENT AG, 7013 Domat / Ems (CH)
(72) Erfinder: Roth, Mark D., 57339 Erndtebrück (DE); Lamberts, Nikolai, 7402 Bonaduz (CH); Hoffmann, Botho, 7013 Domat/Ems (CH)
(74) Vertreter: Pfenning, Meinig & Partner mbB

(56) Entgegenhaltungen:
- WO-A1-2009/095440
- DE-A1-102010 023 770
- JP-A- 2002 138 198
- US-A1- 2003 130 381
- US-A1- 2010 311 882
- US-A1- 2012 010 343

## Beschreibung

Die vorliegende Erfindung betrifft schwarz eingefärbte Polyamid-Formmassen, die Nigrosin und zumindest ein Nukleierungsmittel auf Basis von PA 2.2, Kaolinit oder Steatit umfassen, wobei Ruß ausgeschlossen ist. Ebenso betrifft die vorliegende Erfindung ein Verfahren zur Herstellung von Formkörpern aus den besagten Polyamid-Formassen sowie die entsprechenden Formkörper. Verwendung finden die Polyamid-Formmassen bei der Herstellung von Bauteilen mit erhöhten Temperaturanforderungen, z.B. im Automobilsektor.

Für teilkristalline Polymere ist bekannt, dass diese beim Abkühlen aus der Schmelze partiell auskristallisieren. Diese Kristallisation wird normalerweise durch die Gefäßwände, Staub oder Hilfsstoffe wie Pigmente etc. ausgelöst. Erfolgt die Kristallisation um den Keim gleichmäßig, so entstehen Sphärolite. Je größer diese Sphärolite sind, umso ungünstiger ist das mechanische Verhalten des Kunststoffes, z.B. ist ein hieraus hergestellter Formkörper bruchanfälliger. Daher ist eine Erhöhung der Keimzahl erwünscht. Ebenso wird so die Taktzeit bei der Verarbeitung reduziert, da der Kunststoff schneller fest wird. Aus diesem Grunde setzt man dem Polymer sogenannte Nukleierungsmittel in der Schmelze zu.

Ein bekanntes Additiv, das im Bereich der Polyamide eingesetzt wird, ist Nigrosin. Hierbei handelt es sich um eine Mischung aus synthetischen schwarzen Farbmitteln, die aus einer Mischung von Nitrobenzol, Anilin und Anilinhydrochlorid in der Gegenwart eines Kupfer- oder Eisen-Katalysators hergestellt werden können. Nigrosin wird z.B. wegen seiner oberflächenmodifizierenden Wirkung häufig zum Einfärben von Polyamiden verwendet.

Weiterhin ist der Zusatz von Ruß als Färbemittel bei Polyamiden bekannt, wobei hierdurch auch die Witterungsbeständigkeit verbessert werden kann, da durch Ruß UV-Strahlung reflektiert bzw. absorbiert werden kann.

Aus dem Stand der Technik sind ebenfalls bereits Polyamid-Formmassen bekannt, bei denen eine Kombination von Nigrosin und Ruß eingesetzt wird.

So beschreibt die EP 0 052 944 A1 Polyamid-Zusammensetzungen, die Ruß und Nigrosin enthalten. Diese weisen eine höhere Reißdehnung und Schlagzähigkeit als nur Ruß enthaltende Polyamid-Zusammensetzungen auf. Es werden Beispiele mit PA 66, Nigrosin, Ruß und PA 6 (über ein Rußmasterbatch) aufgeführt.

Die EP 0 796 886 A2 betrifft schwarze Polyamid-Zusammensetzungen, die ein Polyamid und Farbmittel, die Ruß, Nigrosin und Anilinschwarz umfassen, enthalten. Diese Polyamid-Zusammensetzungen weisen ein gutes Erscheinungsbild, guten Oberflächenglanz und gute mechanische Eigenschaften auf.

Die DE 696 32 529 T2 betrifft lichtstabilisierte Polyamid-Zusammensetzungen auf Basis von Polyamid, die ein schwarzes Pigment umfassen. Weiterhin enthalten die Zusammensetzungen Nigrosin als Kristallisationsverzögerer.

Die US2010/311882 A1 betrifft thermoplastische Zusammensetzungen enthaltend A) 19,9% bis 59,9 Gew.-% eines thermoplastischen Polyamids, B) 40 bis 80 Gew.-% eines Aluminiumoxids oder Magnesiumoxids oder ein Gemisch dieser Verbindungen, C) 0,1 bis 2 Ges.-% Nigrosin, D) 0 bis 20 Gew.-% weiterer Zusatzstoffe, wobei die Summe der Gewichtsprozente von A) bis D) 100% beträgt.
Die US2012/311882 A1 betrifft thermoplastische Formmassen, enthaltend A) 10 bis 99,99 Gew.-% eines Polyamids, B) 0,01 bis 20 Gew.-% eines hochfunktionellen Polyetherols mit einer OH-Zahl von 3 bis 1350 mg KOH / g Polyetherol (DIN 53240, Teil 2), C) 0 bis 70 Ges.-% weiterer Zusatzstoffe, wobei die Summe der Gewichtsprozente der Komponenten A) bis C) 100% beträgt.

JP2002-138198A betrifft eine Polyamidharzzusammensetzung umfaßend 1 bis 30 Massenteile eines bestimmten Kristallisationskeimbildners (B) und bis 100 Massenteile eines Polyamid-Copolymerharzes (A), welches durch Polykondensation einer Dicarbonsäure-Komponente (b), die 70 mol-% oder mehr Adipinsäure umfasst, mit einer speziellen Diamin-Komponente (a), erhalten wird.

Diese aus dem Stand der Technik bekannten Systeme weisen jedoch den Nachteil auf, dass sie eine für viele Anwendungen zu geringe Wärmealterungsbeständigkeit aufweisen.

Die Aufgabe der vorliegenden Erfindung bestand somit darin, Formmassen bereitzustellen, deren mechanische Eigenschaften nach Langzeitwärmebeanspruchung gegenüber den aus dem Stand der Technik bekannten Formmassen verbessert sind und insbesondere für Bauteile mit erhöhten Temperaturanforderungen geeignet sind. Außerdem sollten Formmassen bereitgestellt werden, die geringere Oberflächenrauheiten als die Formmassen aus dem Stand der Technik aufweisen.

Diese Aufgabe wird durch die Polyamid-Formmassen mit den Merkmalen des Anspruchs 1, das Verfahren zur Herstellung von Formkörpern mit den Merkmalen des Anspruchs 13 und die Formkörper gemäß Anspruch 14 gelöst. In Anspruch 15 werden erfindungsgemäße Verwendungen angegeben. Die weiteren abhängigen Ansprüche führen vorteilhafte Weiterbildungen auf.

Erfindungsgemäß wird eine Polyamid-Formmasse mit folgender Zusammensetzung bereitgestellt:
(a) 20 bis 99 Ges.-% zumindest eines Polyamids ausgewählt aus der Gruppe bestehend aus PA 6; PA 4.6; PA 6.6; PA 6.6/6; PA 6.10; PA 6.12; PA 10.10; PA 11; PA 12; PA MXD.6; PA MXD.10; PA MACM.12; PA PACM.12; PA 6.T/6.I; PA 6.T/6.6; PA 6.T/6.12; PA 6.T/10.12; PA 4.T; PA 9.T; PA 10.T; PA 12.T; PA 10/6.T; PA 6.T/6.I/6.6; PA 11/10.T; PA 12/10.T; PA 6.10/10.T; PA 6.12/10T; PA 10.10/10T; PA 10.12/10.T; PA 12.12/10T; PA 11/10.T/12; PA 11/10.T/6; PA 12/10.T/6; PA 11/10.T/10.I; PA 11/10.T/10.6; PA 12/10.T/10.I; PA 12/10.T/10.6; PA 6.T/MPMD.T (PAMPMDT = Polyamid aus einer Mischung aus Hexamethylendiamin und 2-Methyl Pentamethylendiamin als Diaminkomponente und Terephthalsäure als Disäurekomponente); Polyamiden deren Diaminbaustein PACM, MACM, CHDA (CHDA= Cyclohexyldiamin), oder TMDC (TMDC = Tetramethyl Dicykan) ist; und deren Mischungen. Besonders bevorzugt ist und/oder Mischungen oder Blends,
(b) 0.05 bis 5 Gew.-% Nigrosin,
(c) 0.005 bis 0.5 Gew.-% zumindest eines Nukleierungsmittels ausgewählt aus der Gruppe bestehend aus Nukleierungsmitteln auf Basis von PA 2.2, Kaolinit und Steatit,
(d) 0 bis 79,945 Gew.-% zumindest eines nicht als Nukleierungsmittel wirkenden Additivs oder Zusatzstoffes.

Hierbei ergänzen sich die Komponenten (a) bis (d) in der Summe auf 100 Gew.-% der Polyamid-Formmasse, wobei das Vorhandensein von Ruß in der Polyamidformmasse ausgeschlossen ist.

Die erfindungsgemäßen Formmassen weisen gegenüber den aus dem Stand der Technik bekannten Formmassen eine verbesserte Wärmalterungsbeständigkeit und eine niedrigere Oberflächenrauheit auf.

Vorzugsweise ist das Polyamid (a) ein Blend aus PA 6 und PA 66 oder aus PA 6 und Polyphthalamid.

Die Polyamidformmasse enthält bevorzugt zwischen 24.20 und 98.9125 Gew.-%, insbesondere bevorzugt zwischen 31.50 und 94.89 Gew.-% und besonders bevorzugt zwischen 38.00 und 84.75 Ges.-% Polyamid.

Die Nukleierungsmittel weisen vorzugsweise eine Partikelgröße (d0.5) im Bereich von 1 µm bis 20 µm, besonders bevorzugt von 5 µm bis 12 µm auf.

Die Nukleierungsmittel der vorliegenden Erfindung erhöhen die Erstarrungsgeschwindigkeit, die wie im experimentellen Teil beschrieben gemessen wurde, bezogen auf eine Formmasse die nur die erfindungsgemässen Komponenten (a), (b) und optional (d) enthält um mindestens 10 %, vorzugsweise um mindestens 30 % und besonders bevorzugt um mindestens 100 %.

Die erfindungsgemäße Polyamid-Formmasse enthält vorzugsweise 0.08 bis 4 Gew.-%, bevorzugt in 0.1 bis 2 Gew.-% und besonders bevorzugt in 0.2 bis 1.5 Gew.-% Nigrosin (b).

Vorzugsweise enthält die Polyamid-Formmasse 0.01 bis 0.5 Gew.-% und bevorzugt 0.05 bis 0.5 Ges.-% des zumindest einen Nukleierungsmittels (c).

Als Additiv oder Zusatzstoff (d) können Komponenten ausgewählt aus der Gruppe bestehend aus Glasfasern, Glaskugeln, Kohlenstofffasern, Mineralpulvern, UV-Stabilisatoren, Wärmestabilisatoren, Gleit- und Entformungshilfsmitteln, Schlagzähmodifikatoren und Mischungen hiervon enthalten sein, insbesondere bevorzugt sind Glasfasern. Die Additive wirken nicht als Nukleierungsmittel im Sinne der vorliegenden Erfindung.

Wärmestabilisatoren im Sinne der vorliegenden Erfindung sind Metallsalze, phenolische Antioxidantien; aminische Antioxidantien; Phosphite; Phosphonite; und/oder Mischungen daraus. Die folgende Aufzählung der Wärmestabilisatoren ist nicht als beschränkend zu sehen.

Metallsalze sind dabei z.B. Kupfer(I)-iodid und andere Kupferhalogenide; Mischungen aus Kupferhalogeniden und Kaliumiodid oder anderen Halogeniden der 1. Hauptgruppe; Eisen(II)-Salze wie z.B. FeCl₂, Fe(SO₄) und Fe₃O₄; Eisen(III)-Salzen wie z.B. Fe₂(SO4)₃, FeCl₃ und Fe₂O₃; andere Übergangsmetallsalze, z.B. Salze von Vanadium, Niob, Tantal, Chrom, Molybdän, Wolfram, Osmium, Cobalt, Rhodium, Iridium, Palladium, Platin und Nickel, bevorzugt werden Kupferhalogenide in Kombination mit Kaliumhalogeniden eingesetzt und besonders bevorzugt wird eine Mischung aus Kupfer(I)-iodid und Kaliumiodid eingesetzt, wobei das molare Verhältnis von Kaliumiodid zu Kupferiodid 0.5 bis 20, bevorzugt 1 bis 18 und besonders bevorzugt 3 bis 15 beträgt.

Bevorzugte aminische Antioxidantien sind sekundäre aromatische Amine wie Addukte aus Phenylendiamin mit Aceton (Naugard A); Addukte aus Phenylendiamin mit Linolen; Naugard 445, N,N'-Dinaphthyl-p-phenylendiamin; N-Phenyl-N'-cyclohexyl-p-phenylendiamin; Blends aus Reaktionsprodukten aus einem Addukt aus einem Keton und N,N'-Diphenyl-p-phenylenediamin und oder Mischungen von zwei oder mehreren davon oder Blends aus Dirarylamin-Keton-Addukte und N,N'-Diphenyl-p-phenylenediamin, wobei Blends aus Dirarylamin-Keton-Addukte und N,N'-Diphenyl-p-phenylenediamin bevorzugt sind.

Bevorzugte phenolische Antioxidantien sind sterisch gehinderte Phenole wie N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox® PAR24: Handelsprodukt der Firma Clariant, Basel).

In einer bevorzugten Ausführungsform wird eine Mischung aus Kupfer(I)-iodid und Kaliumiodid verwendet. Eine besonders bevorzugte Ausführungsform sieht die Verwendung eines aminischen Antioxidationsmittels und einer Mischung aus Kupfer(I)-iodid und Kaliumiodid vor.

Es ist weiter bevorzugt, dass das zumindest eine Additiv (d) in einer Menge von 1.0 bis 70 Gew.-%, bevorzugt in 5 bis 65 Gew.-% und besonders bevorzugt in 15 bis 60 Gew.-% enthalten ist.

Der Mengenanteil des Wärmestabilisators bezogen auf die Gesamtmenge der Polyamidformmasse beträgt bevorzugt 0.01 bis 5 Gew.-%, besonders bevorzugt 0.05 bis 5 Gew.-% und insbesondere bevorzugt 0.1 bis 2 Ges.-%.

Eine bevorzugte Polyamid-Formmasse weist folgende Zusammensetzung auf:
(a1) 0.4 bis 14 Gew.-% PA 6
(a2) 26 bis 97 Gew.-% PA 66 oder ein Polyphthalamid
(b) 0.4 bis 2 Ges.-% Nigrosin,
(c) 0.1 bis 2 Gew.-% zumindest eines Nukleierungsmittels ausgewählt aus der Gruppe bestehend aus Nukleierungsmitteln auf Basis von PA 2.2, Kaolinit und Steatit,
(d) 0.1 bis 73.1 Ges.-% zumindest eines Additivs oder Zusatzstoffes.

Hierbei ergänzen sich die Komponenten (a) bis (d) in der Summe auf 100 Gew.-% der Polyamid-Formmasse und Ruß darf nicht in der Formmasse enthalten sein.

In einer weiteren bevorzugten Ausführungsform enthält die Formmasse 0.4 bis 16 Ges.-%, insbesondere bevorzugt 0.5 bis 14 Gew.-% und besonders bevorzugt 0.6 bis 13 Ges.-% PA 6.

Wenn die Polyamid-Formmasse aliphatisch ist, weist diese nach 2000 h Wärmelagerung bei 230°C eine Reißfestigkeit bestimmt nach ISO 527 vorzugsweise von mindestens 60 %, bevorzugt von mindestens 65 % und besonders bevorzugt von mindestens 72 %, bezogen auf den nach ISO 527 bestimmten Wert für die Reißdehnung vor der Wärmelagerung, auf. Die nach der gleichen Methodik bestimmte Reißdehnung nach 2000 h Wärmelagerung bei 230°C beträgt vorzugsweise mindestens 50 %, bevorzugt mindestens 55 % und besonders bevorzugt mindestens 58 %, bezogen auf den nach ISO 527 bestimmten Wert für die Reißdehnung vor der Wärmelagerung.

Wenn die Polyamid-Formmasse teilaromatisch ist, weist diese nach 3000 h Wärmelagerung bei 180°C eine Reißfestigkeit bestimmt nach ISO 527 vorzugsweise von mindestens 69 % bezogen auf den nach ISO 527 bestimmten Wert für die Reißdehnung vor der Wärmelagerung, auf. Die nach der gleichen Methodik bestimmte Reißdehnung nach 3000 h Wärmelagerung bei 180°C beträgt vorzugsweise mindestens 63 %, bevorzugt mindestens 67 % und besonders bevorzugt mindestens 71 %, bezogen auf den nach ISO 527 bestimmten Wert für die Reißdehnung vor der Wärmelagerung.
Erfindungsgemäß wird ebenso ein Verfahren zur Herstellung von Formkörpern, insbesondere von Automobilbauteilen zur motornahen Verwendung, aus einer Polyamid-Formmasse bereitgestellt, wobei die zuvor beschriebene erfindungsgemäße Polyamid-Formmasse extrudiert oder spritzgegossen wird.

Ebenso werden Formkörper für Teile mit erhöhten Temperaturanforderungen bis 230°C, insbesondere Automobilbauteile zur motornahen Verwendung, bereitgestellt, die aus der zuvor beschriebenen erfindungsgemäßen Polyamid-Formmasse hergestellt wurden.

Verwendung finden die erfindungsgemäßen Polyamid-Formmassen bei der Herstellung von Bauteilen mit erhöhten Temperaturanforderungen bis 230 °C, insbesondere für Automobilbauteile zur motornahen Verwendung wie Ladeluftkühlerseitenteile, Ansaugsysteme, Ölwannen, Einspritzdüsen etc.

Anhand der nachfolgenden Beispiele sollen die erfindungsgemäßen Formmassen und Formkörper näher spezifiziert werden, ohne diese auf die hier gezeigten spezifischen Ausführungsformen einzuschränken.

### Beispiele

Die in Tabelle 1 aufgeführten Materialien wurden in den Beispielen und Vergleichsbeispielen eingesetzt.

**Tabelle 1**

| **Stoff** | **Handelsname** | **Lieferant** | **H₂O-Gehalt [Gew.%]** | **Relative Viskosität** |
|---|---|---|---|---|
| PA 66 | Radipol A45 | Radici (IT) | 0.25 | 2.70^{d} |
| PA 6 | Grilon F26 | EMS-CHEMIE AG (CH) | 0.04 | 2.64^{d} |
| PA 6.T/6.I | XE 3733NK | EMS-CHEMIE AG (CH) | 0.05 | 1.54^{e} |
| Kupferiodid | - | William Blythe (UK) | - | - |
| KI/Ca-Stearat (Verhältnis 98:2) | - | AJAY Erope S.A.R.L. (FR)^{f} | - | - |
| Ca-Stearat | Ligastar CA 800 | Greven (DE) | - | - |
| Stabilisatormischung^{a} | - | Greven (DE), William Blythe (UK), Chemtura (BE), Brüggemann Chem. (DE) | - | - |
| Nukleierungsmittel 1 | Brüggolen® P22 | Brüggemann Chem. (DE) | - | - |
| Nukleierungsmittel 2 | Mikrotalk IT Extra | Plüss-Staufer (CH) | - | - |
| Nukleierungsmittel 3 | Kaolin | Imerys Performance & Filtration Minerals (UK) | - | - |
| Nigrosinhaltiger Schwarzmasterbatch^{b} | PA N 54/1033 | Colloids (UK) | - | - |
| Russhaltiger Schwarzmasterbatch^{c} | MB XE 3846 | EMS-CHEMIE AG (CH) | - | - |
| Glasfasern | Vetrotrex 995 EC10-4.5 | OCV (FR) | - | - |

| | | | | |
|---|---|---|---|---|
| a) Mischung aus handelsüblichen Stabilisatoren die nicht nukleierend wirken b) Masterbatch mit einem Nigrosinanteil von 40 Gew.-% c) Masterbatch mit einem Russanteil von 15 Gew.-% d) bestimmt nach ISO 307 (1 g Polyamid in 100 ml Schwefelsäure), Berechnung der relativen Viskosität (RV) nach RV = t/t₀ in Anlehnung an Abschnitt 11 der Norm; e) bestimmt nach ISO 307 (0.5 g Polyamid in 100 ml m-Kresol), Berechnung der relativen Viskosität (RV) nach RV = t/t₀ in Anlehnung an Abschnitt 11 der Norm; f) Lieferant von KI, Abmischung mit Ca-Stearat erfolgt bei EMS | | | | |

Die Formmassen für die erfindungsgemäßen Beispiele Blbis B3 sowie für die Vergleichsbeispiele VB1 und VB1a bis VB5 wurden auf einem Zweiwellenextruder der Fa. Werner und Pfleiderer Typ ZSK25 hergestellt. Es wurden die in Tabelle 2 angegebenen Mengenanteile der Ausgangsstoffe in Gewichtsprozent (Gew.-%) bezogen auf 100 Gew.-% der gesamten Formmasse im Zweiwellenextruder compoundiert.

**Tabelle 2**

| Zusammensetzung | B1 | VB1a | B2 | VB1 | VB2 | VB3 | B3 | VB4 |
|---|---|---|---|---|---|---|---|---|
| PA 66 | 54.564 | 54.244 | 54.244 | 54.644 | 54.404 | - | - | - |
| PA 6 | 12.741 | 12.961 | 12.961 | 12.761 | 13.001 | - | - | - |
| 6.T/6.I | - | - | - | - | - | 47.625 | 48.625 | 45.625 |
| Ca-Stearat | 0.50 | 0.50 | 0.50 | 0.50 | 0.50 | - | - | - |
| Kupferiodid | 0.035 | 0.035 | 0.035 | 0.035 | 0.035 | 0.025 | 0.025 | 0.025 |
| KI/Ca-Stearat (Verhältnis 98:2) | 0.21 | 0.21 | 0.21 | 0.21 | 0.21 | 0.15 | 0.15 | 0.15 |
| Stabilisatormischung | 0.35 | 0.35 | 0.35 | 0.35 | 0.35 | - | - | - |
| Nukleierungsmittel 1 | 0.10 | - | 0.20 | - | - | - | - | - |
| Nukleierungsmittel 2 | - | 0.20 | - | - | - | - | - | - |
| Nukleierungsmittel 3 | - | - | - | - | - | 0.20 | 0.20 | 0.20 |
| Nigrosinhaltiger Schwarzmasterbatch | 1.5 | 1.5 | 1.5 | 1.5 | 1.5 | - | 1.0 | 2.0 |
| Russhaltiger Schwarzmasterbatch | - | - | - | - | - | 2.0 | - | 2.0 |
| Glasfasern | 30.0 | 30.0 | 30.0 | 30.0 | 30.0 | 50.0 | 50.0 | 50.0 |
| Oberflächenrauheit | + | + | + | + | + | - | + | - |
| Erstarrungssgeschwindigkeit [J/(g*min)] | 31.3 | n.b. | n.b. | 14.8 | n.b. | n.b. | n.b. | n.b. |

Die beiden erfindungsgemäßen Zusammensetzungen Blund B2 sind im Hinblick auf die Menge (0,1 bzw. 0,2 Gew.-%) des Nukleierungsmittels variiert worden. Das Vergleichsbeispiel VB1 weist die gleiche Zusammensetzung wie das erfindungsgemäße Beispiel B1 auf, allerdings ohne Nukleierungsmittel. Das Vergleichsbeispiel VB2 weist die gleiche Zusammensetzung wie das erfindungsgemäßen Beispiele B2 auf, allerdings ohne Nukleierungsmittel.

In Tabelle 3 sind die mechanischen Eigenschaften der Zusammensetzungen gemäß den Beispielen 1 und 2 und den Vergleichsbeispielen 1, 1a und 2 aufgeführt. Hier wurden die mechanischen Eigenschaften (ME) nach einer Wärmelagerung bei 230°C bestimmt.

Außerdem wurde eine Studie über die Verwendung von Ruß in nigrosinhaltigen, nukleierten PA-Formmassen durchgeführt. Die entsprechenden mechanischen Daten nach Lagerung bei 180°C sind in Tabelle 4 zusammengefasst, die Bewertung der Oberflächenrauheit erfolgte in Tabelle 2.

### Beurteilung der Oberflächenrauheit

Die Beurteilung der Oberflächenrauheit erfolgte visuell mit bloßem Auge. Die mit (+) gekennzeichneten Beispiele und Vergleichsbeispiele weisen eine geringe Oberflächenrauheit auf und es lassen sich keine Unebenheiten an der Oberfläche erkennen, bei den mit (-) gekennzeichneten Beispielen und Vergleichsbeispielen hingegen wurden Unebenheiten wahrgenommen.

Die in Tabelle 3 und 4 angegebenen mechanischen Daten wurden nach den folgenden Normen bestimmt:

### Zug-E-Modul:

ISO 527 mit einer Zuggeschwindigkeit von 1 mm/min
ISO-Zugstab, Norm: ISO 3167, Typ A, 170 x 20/10 x 4 mm, Temperatur 23 °C.

### Reißfestigkeit und Reißdehnung:

ISO 527 mit einer Zuggeschwindigkeit von 5 mm/min
ISO-Zugstab, Norm: ISO 3167, Typ A, 170 x 20/10 x 4 mm, Temperatur 23 °C.

### Wärmelagerung

Die Wärmelagerungen wurden in belüfteten, elektrisch beheizten Einzelkammer-Wärmeschränken nach IEC 60216-4-1 bei 180°C oder 230°C an ISO-Zugstäben (Norm: ISO 3167, Typ A, 170 x 20/10 x 4 mm) durchgeführt. Nach den in Tabelle 3 angegebenen Zeiten wurden Probekörper dem Ofen entnommen und nach Abkühlen auf 23°C nach den oben angegebenen Methoden geprüft.

### Bestimmung der Erstarrungsgeschwindigkeit

Die Erstarrungsgeschwindigkeit in J /(g*min) wurde auf einem DSC Q2000 (Differential Scanning Calorimeter) der Firma TA Instruments bestimmt. Als Spülgas wurde Stickstoff und als Kalibriersubstanzen wurden Indium (Smpₒₙ₋ₛₑₜ: 156.6°C, ΔH: 28.45 J/g) und Zink (Smp_{Onset}: 419.5°C, ΔH: 108.37 J/g) verwendet. Es wurden 10 mg der Probe in einen Tiegel aus Aluminium eingewogen und dieser verschlossen. Die Probe wurde dann zunächst mit 20 K/Minute auf 320°C aufgeheizt und nach einer Minute Isothermal, mit 5 K/Minute auf 50°C abgekühlt. Dabei wurde während des Aufheiz- und des Abkühlprozesses der Wärmefluss in W/g über den gesamten Temperaturbereich von 50 bis 320°C aufgezeichnet. Anschliessend wurde die Breite des Kristallisationspeaks durch Anlegen der Tangenten mit dem Programm Universal Analysis von TA Instruments an den Peak bestimmt. Aus dem der Peakbreite entsprechenden Temperaturbereich in K und der Abkühlgeschwindigkeit von 5 K/min wurde rechnerisch die "Zeit für den Kristallisationsvorgang" in Minuten ermittelt. Das Integral unter der Fläche des Peaks entspricht der "Kristallisationsenthalpie" in J/g und wurde mit dem Programm Universal Analysis von TA Instruments bestimmt. Die Erstarrungsgeschwindigkeit in J/(g*min) entspricht dem Quotienten aus der "Kristallisationsenthalpie" und der "Zeit für den Kristallisationsvorgang".

**Tabelle 3**

| | **B1** | **VB1a** | **B2** | **VB1** | **VB2** |
|---|---|---|---|---|---|
| **ME (nach 0 h)** | | | | | |
| Zugmodul [MPa] | 9825 | 8593 | 9226 | 9575 | 8774 |
| Reißfestigkeit [MPa] | 197 | 168 | 176 | 197 | 170 |
| Reißdehnung [%] | 3.2 | 3.9 | 3.9 | 3.3 | 3.9 |

| **ME (nach 250 h)** | | | | | |
|---|---|---|---|---|---|
| Zugmodul [MPa] | 10350 | 9486 | 10057 | 10010 | 9540 |
| Reißfestigkeit [MPa] | 183 | 168 | 180 | 190 | 175 |
| Reißdehnung [%] | 2.2 | 3.0 | 3.3 | 2.5 | 3.3 |

| **ME (nach 500 h)** | | | | | |
|---|---|---|---|---|---|
| Zugmodul [MPa] | 10605 | 9796 | 10363 | 11180 | 9975 |
| Reißfestigkeit [MPa] | 144 | 167 | 178 | 123 | 168 |
| Reißdehnung [%] | 1.6 | 3.0 | 3.2 | 1.3 | 3.2 |

| **ME (nach 1000 h)** | | | | | |
|---|---|---|---|---|---|
| Zugmodul [MPa] | 10195 | 9630 | 9777 | 9495 | 9774 |
| Reißfestigkeit [MPa] | 145 | 164 | 174 | 121 | 168 |
| Reißdehnung [%] | 1.6 | 2.9 | 3.4 | 1.4 | 3.0 |

| **ME (nach 1500 h)** | | | | | |
|---|---|---|---|---|---|
| Zugmodul [MPa] | 10095 | 10220 | 10918 | 9535 | 10432 |
| Reißfestigkeit [MPa] | 145 | 170 | 181 | 120 | 173 |
| Reißdehnung [%] | 1.7 | 3.0 | 3.1 | 1.4 | 3.4 |

| **ME (nach 2000 h)** | | | | | |
|---|---|---|---|---|---|
| Zugmodul [MPa] | 9285 | 10240 | 10849 | 8495 | 10256 |
| Reißfestigkeit [MPa] | 144 | 167 | 178 | 113 | 141 |
| Reißfestigkeit bezogen auf den Ausgangswert [%] | 73 | 99 | 101 | 57 | 83 |
| Reißdehnung [%] | 1.9 | 3.3 | 3.3 | 1.6 | 1.8 |
| Reißdehnung bezogen auf den Ausgangswert [%] | 59 | 85 | 85 | 48 | 46 |

| **ME (nach 3000 h)** | | | | | |
|---|---|---|---|---|---|
| Zugmodul [MPa] | 8425 | n. b. | n. b. | 5995 | n. b. |
| Reißfestigkeit [MPa] | 134 | n. b. | n. b. | 83 | n. b. |
| Reißfestigkeit bezogen auf den Ausgangswert [%] | 68 | | | 42 | |
| Reißdehnung [%] | 2.0 | n. b. | n. b. | 1.7 | n. b. |
| Reißdehnung bezogen auf den Ausgangswert [%] | 63 | | | 52 | |

| | | | | | |
|---|---|---|---|---|---|
| n. b. = nicht bestimmt | | | | | |

**Tabelle 4**

| | **VB3** | **B3** | **VB4** |
|---|---|---|---|
| **ME (nach 0 h)** | | | |
| Zugmodul [MPa] | 18353 | 17425 | 18697 |
| Reißfestigkeit [MPa] | 268 | 268 | 269 |
| Reißdehnung [%] | 2.1 | 2.1 | 2.1 |

| **ME (nach 500 h)** | | | |
|---|---|---|---|
| Zugmodul [MPa] | 19511 | 18948 | 20053 |
| Reißfestigkeit [MPa] | 231 | 243 | 228 |
| Reißdehnung [%] | 1.5 | 1.7 | 1.5 |

| **ME (nach 1000 h)** | | | |
|---|---|---|---|
| Zugmodul [MPa] | 19770 | 18938 | 20116 |
| Reißfestigkeit [MPa] | 212 | 223 | 209 |
| Reißdehnung [%] | 1.4 | 1.6 | 1.3 |

| **ME (nach 2000 h)** | | | |
|---|---|---|---|
| Zugmodul [MPa] | 19364 | 18716 | 19738 |
| Reißfestigkeit [MPa] | 202 | 199 | 186 |
| Reißfestigkeit bezogen auf den Ausgangswert [%] | 75 | 74 | 69 |
| Reißdehnung [%] | 1.3 | 1.4 | 1.2 |
| Reißdehnung bezogen auf den Ausgangswert [%] | 62 | 67 | 57 |

| **ME (nach 3000 h)** | | | |
|---|---|---|---|
| Zugmodul [MPa] | 18657 | 18270 | 19632 |
| Reißfestigkeit [MPa] | 183 | 184 | 161 |
| Reißfestigkeit bezogen auf den Ausgangswert [%] | 68 | 69 | 60 |
| Reißdehnung [%] | 1.3 | 1.5 | 1.1 |
| Reißdehnung bezogen auf den Ausgangswert [%] | 62 | 71 | 52 |

Aus den von den Erfindern durchgeführten Studien geht hervor, dass Polyamidformmassen, die neben Nigrosin auch zumindest ein Nukleierungsmittel auf Basis von PA 2.2 oder Kaolinit enthalten, eine verbesserte Wärmealterungsbeständigkeit aufweisen. Außerdem wurde gezeigt, dass Ruß in Kombination mit Nigrosin nicht in der Lage ist, die erfindungsgemäße Aufgabe, nämlich die Bereitstellung einer Polyamidformmasse mit verbesserte Wärmealterungsbeständigkeit und niedriger Oberflächenrauheit, zu lösen. Der Einsatz von Ruß erhöht die Oberflächenrauheit und für die Kombination Nigrosin und Ruß werden sogar schlechtere Langzeitwärmebeständigkeiten erhalten, als wenn Ruß oder Nigrosin alleine eingesetzt werden.

## Patentansprüche

1. Polyamid-Formmasse mit folgender Zusammensetzung:
(a) 20 bis 99 Gew.-% zumindest eines Polyamids ausgewählt aus der Gruppe bestehend aus PA 6; PA 4.6; PA 6.6; PA 6.6/6; PA 6.10; PA 6.12; PA 10.10; PA 11; PA 12; PA MXD.6; PA MXD.10; PA MACM 12; PA PACM 12; PA 6.T/6.I; PA 6.T/6.6; PA 6.T/6.12; PA 6.T/10.12; PA 4.T; PA 9.T; PA 10.T; PA 12.T; PA 10/6.T; PA 6.T/6.I/6.6; PA 11/10.T; PA 12/10.T; PA 6.10/10.T; PA 6.12/10T; PA 10.10/10T; PA 10.12/10.T; PA 12.12/10T; PA 11/10.T/12; PA 11/10.T/6; PA 12/10.T/6; PA 11/10.T/10.I; PA 11/10.T/10.6; PA 12/10.T/10.I; PA 12/10.T/10.6; PA 6.T/MPMD.T; (PAMPMDT = Polyamid aus einer Mischung aus Hexamethylendiamin und 2-Methyl Pentamethyldiamin als Diaminkomponente und Terephthalsäure als Disäurekomponente); Polyamiden deren Diaminbaustein PACM, MACM, CHDA (CHDA = Cyclohexyldiamin), oder TMDC (TMDC = Tetramethyl Dicykan) ist und/oder deren Mischungen oder Blends,
(b) 0.05 bis 5 Gew.-% Nigrosin,
(c) 0.005 bis 0.5 Gew.-% zumindest eines Nukleierungsmittels ausgewählt aus der Gruppe bestehend aus Nukleierungsmitteln auf Basis von PA 2.2, Kaolinit und Steatit,
(d) 0 bis 79,945 Gew.-% zumindest eines nicht als Nukleierungsmittel wirkendes Additivs oder Zusatzstoffes,
wobei sich die Komponenten (a) bis (d) in der Summe auf 100 Ges.-% der Polyamid-Formmasse ergänzen und wobei Ruß kein Bestandteil der Polyamid-Formmasse ist.

2. Polyamid-Formmasse nach Anspruch 1,
**dadurch gekennzeichnet, dass** das Polyamid (a) ein Blend aus PA 6 und PA 66 oder aus PA 6 und Polyphthalamid ist.

3. Polyamid-Formmasse nach Anspruch 1, **dadurch gekennzeichnet, dass** das Polyamid (a) 0.4 bis 16 Gew.-%, bevorzugt 0.5 bis 14 Ges.-% und besonders bevorzugt 0.6 bis 13 Gew.-% PA 6 enthält.

4. Polyamid-Formmasse nach einem der vorhergehenden Ansprüche,
**dadurch gekennzeichnet, dass** Nigrosin (b) in 0.08 bis 4 Gew.-%, bevorzugt in 0.1 bis 2 Ges.-% und besonders bevorzugt in 0.2 bis 1.5 Gew.-% enthalten ist.

5. Polyamid-Formmasse nach einem der vorhergehenden Ansprüche,
**dadurch gekennzeichnet, dass** das zumindest eine Nukleierungsmittel (c) in 0.01 bis 0.5 Ges.-% und bevorzugt in 0.05 bis 0.5 Gew.-% enthalten ist.

6. Polyamid-Formmasse nach einem der vorhergehenden Ansprüche,
**dadurch gekennzeichnet, dass** das zumindest eine Additiv oder der Zusatzstoff (d) ausgewählt ist aus der Gruppe bestehend aus Glasfasern, Glaskugeln, Kohlenstoffasern, Mineralpulvern, UV-Stabilisatoren; Wärmestabilisatoren, insbesondere Metallsalze, phenolische Antioxidantien; aminische Antioxidiantien; Phosphite; Phosphonite; und/oder Mischungen daraus, wobei eine Mischung aus Mischung aus Kupfer(I)iodid und Kaliumiodid besonders bevorzugt ist und ein aminisches Antioxidationsmittel und eine Mischung aus Kupfer(I)iodid und Kaliumiodid besonders bevorzugt ist; Gleit- und Entformungshilfsmitteln; Schlagzähmodifikatoren uno Mischungen daraus.

7. Polyamid-Formmasse nach einem der vorhergehenden Ansprüche,
**dadurch gekennzeichnet, dass** das zumindest eine Additiv (d) in 1.0 bis 79.945 Gew.-%, bevorzugt in 5 bis 70 Gew.-% und insbesondere bevorzugt in 15 bis 65 Ges.-% enthalten ist.

8. Polyamid-Formmasse nach einem der vorhergehenden Ansprüche mit folgender Zusammensetzung:
(a1) 0.4 bis 14 Gew.-% PA 6
(a2) 26 bis 97 Gew.-% PA 66 oder ein Polyphthalamid
(b) 0.4 bis 2 Ges.-% Nigrosin
(c) 0.1 bis 0.5 Gew.-% zumindest eines Nukleierungsmittels ausgewählt aus der Gruppe bestehend aus Nukleierungsmitteln auf Basis von PA 2.2, Kaolinit und Steatit,
(d) 0.1 bis 73.1 Ges.-% zumindest eines nicht als Nukleierungsmittel wirkenden Additivs oder Zusatzstoffes;
wobei sich die Komponenten (a) bis (d) in der Summe auf 100 Ges.-% der Polyamid-Formmasse ergänzen und wobei Ruß kein Bestandteil der Polyamid-Formmasse ist.

9. Polyamid-Formmasse nach einem der vorhergehenden Ansprüche,
**dadurch gekennzeichnet, dass** das Polyamid aliphatisch ist und nach 2000 h Wärmelagerung bei 230°C eine Reißfestigkeit bestimmt nach ISO 527 von mindestens 60 %, bevorzugt mindestens 65 % und besonders bevorzugt von mindestens 72 % bezogen auf den nach ISO 527 bestimmten Wert für die Reißfestigkeit vor der Wärmelagerung aufweist und/oder nach 2000 h Wärmelagerung bei 230°C eine Reißdehnung bestimmt nach ISO 527 von mindestens 50 %, bevorzugt mindestens 55 % und besonders bevorzugt von mindestens 58 % bezogen auf den nach ISO 527 bestimmten Wert für die Reißdehnung vor der Wärmelagerung aufweist.

10. Polyamid-Formmasse nach einem der Ansprüche 1 bis 2 und 4 bis 8,
**dadurch gekennzeichnet, dass** das Polyamid teilaromatisch ist und nach 3000 h Wärmelagerung bei 180°C eine Reißfestigkeit bestimmt nach ISO 527 von mindestens 69 % bezogen auf den nach ISO 527 bestimmten Wert für die Reißfestigkeit vor der Wärmelagerung aufweist und/oder nach 3000 h Wärmelagerung bei 180°C eine Reißdehnung bestimmt nach ISO 527 von mindestens 63 %, bevorzugt mindestens 67 % und besonders bevorzugt von mindestens 70 % bezogen auf den nach ISO 527 bestimmten Wert für die Reißdehnung vor der Wärmelagerung aufweist.

11. Verfahren zur Herstellung von Formkörpern, insbesondere von Automobilbauteilen zur motornahen Verwendung, aus einer Polyamid-Formmasse, **dadurch gekennzeichnet, dass** eine Polyamid-Formmasse gemäß einem der Ansprüche 1 bis 10 extrudiert oder spritzgegossen wird.

12. Formkörper, für Teile mit erhöhten Temperaturanforderungen bis 230°C, insbesondere Automobilbauteile zur motornahen Verwendung, hergestellt aus einer Polyamid-Formmasse nach einem der vorhergehenden Ansprüche.

13. Verwendung einer Polyamid-Formmasse nach einem der Ansprüche 1 bis 10 oder eines Formkörpers nach Anspruch 12 für Bauteile mit erhöhten Temperaturanforderungen bis 230 °C, insbesondere für Automobilbauteile zur motornahen Verwendung wie Ladeluftkühlerseitenteile, Ansaugsysteme, Ölwannen, Einspritzdüsen.

## Claims

1. Polyamide moulding compound having the following composition:
(a) 20 to 99% by weight of at least one polyamide selected from the group consisting of PA 6; PA 4.6; PA 6.6; PA 6.6/6; PA 6.10; PA 6.12; PA 10.10; PA 11; PA 12; PA MXD.6; PA MXD.10; PA MACM.12; PA PACM.12; PA 6.T/6.I; PA 6.T/6.6; PA 6.T/6.12; PA 6.T/10.12; PA 4.T; PA 9.T; PA 10.T; PA 12.T; PA 10/6.T; PA 6.T/6.I/6.6; PA 11/10.T; PA 12/10.T; PA 6.10/10.T; PA 6.12/10T; PA 10.10/10T; PA 10.12/10.T; PA 12.12/10T; PA 11/10.T/12; PA 11/10.T/6; PA 12/10.T/6; PA 11/10.T/10.I; PA 11/10.T/10.6; PA 12/10.T/10.I; PA 12/10.T/10.6; PA 6.T/MPMD.T; (PAMPMDT = polyamide made of a mixture of hexamethylenediamine and 2-methyl pentamethylenediamine as diamine component and terephthalic acid as diacid component); polyamides, the diamine component of which is PACM, MACM, CHDA (CHDA = cyclohexyldiamine) or TMDC (TMDC = tetramethyldicykan) and/or mixtures or blends thereof,
(b) 0.05 to 5% by weight of nigrosin,
(c) 0.005 to 0.5% by weight of at least one nucleation agent selected from the group consisting of nucleation agents based on PA 2.2, kaolinite and steatite,
(d) 0 to 79.945% by weight of at least one additive or supplement not acting as nucleation agent,
wherein components (a) to (d) add up in total to 100% by weight of the polyamide moulding compound and carbon black is not a component of the polyamide moulding compound.

2. Polyamide moulding compound according to claim 1,
**characterised in that** polyamide (a) is a blend of PA 6 and PA 66 or of PA 6 and polyphthalamide.

3. Polyamide moulding compound according to claim 1,
**characterised in that** polyamide (a) comprises 0.4 to 16% by weight, preferably 0.5 to 14% by weight and particularly preferred 0.6 to 13% by weight of PA 6.

4. Polyamide moulding compound according to one of the preceding claims,
**characterised in that** nigrosin (b) is comprised in 0.08 to 4% by weight, preferably in 0.1 to 2% by weight and particularly preferred in 0.2 to 1.5% by weight.

5. Polyamide moulding compound according to one of the preceding claims,
**characterised in that** the at least one nucleation agent (c) is comprised in 0.01 to 0.5% by weight and preferably in 0.05 to 0.5% by weight.

6. Polyamide moulding compound according to one of the preceding claims,
**characterised in that** the at least one additive or the supplement (d) is selected from the group consisting of glass fibres; glass balls; carbon fibres; mineral powders; UV stabilisers; heat stabilisers, in particular metallic salts, phenolic antioxidants; aminic antioxidants; phosphites, phosphonites; and/or mixtures thereof, a mixture of copper(I) iodide and potassium iodide being particularly preferred and an aminic antioxidant and a mixture of copper(I) iodide and potassium iodide being particularly preferred; lubricants and mould-release agents, impact modifiers and/or mixtures thereof.

7. Polyamide moulding compound according to one of the preceding claims,
**characterised in that** the at least one additive (d) is comprised in 1.0 to 79.945% by weight, preferably in 5 to 70% by weight and particularly preferred in 15 to 60% by weight.

8. Polyamide moulding compound according to one of the preceding claims having the following composition:
(a1) 0.4 to 14% by weight of PA 6
(a2) 26 to 97% by weight of PA 66 or a polyphthalamide
(b) 0.4 to 2% by weight of nigrosin
(c) 0.1 to 0.5% by weight of at least one nucleation agent selected from the group consisting of nucleation agents based on PA 2.2, kaolinite and steatite,
(d) 0.1 to 73.1% by weight of at least one additive or supplement not acting as nucleation agent;
wherein components (a) to (d) add up in total to 100% by weight of the polyamide moulding compound and carbon black is not a component of the polyamide moulding compound.

9. Polyamide moulding compound according to one of the preceding claims,
**characterised in that** the polyamide is aliphatic and, after 2,000 h high-temperature ageing at 230°C, has a tensile strength at break, determined according to ISO 527, of at least 60%, preferably at least 65% and particularly preferred of at least 72%, relative to the value, determined according to ISO 527, for the tensile strength before the high-temperature ageing and/or, after 2,000 h high-temperature ageing at 230°C, has an elongation at break, determined according to ISO 527, of at least 50%, preferably at least 55% and particularly preferred of at least 58%, relative to the value, determined according to ISO 527, for the elongation at break before the high-temperature ageing.

10. Polyamide moulding compound according to one of the claims 1 to 2 and 4 to 8,
**characterised in that** the polyamide is partly aromatic and, after 3,000 h high-temperature ageing at 180°C, has a tensile strength at break, determined according to ISO 527, of at least 69%, relative to the value, determined according to ISO 527, for the tensile strength at break before the high-temperature ageing and/or, after 3,000 h high-temperature ageing at 180°C, has an elongation at break, determined according to ISO 527, of at least 63%, preferably at least 67% and particularly preferred of at least 70%, relative to the value, determined according to ISO 527, for the elongation at break before the high-temperature ageing.

11. Method for producing moulded articles, in particular automobile components for use close to the engine, made of a polyamide moulding compound, **characterised in that** a polyamide moulding compound according to one of the claims 1 to 10 is extruded or injection-moulded.

12. Moulded articles, for parts with increased temperature requirements up to 230°C, in particular automobile components for use close to the engine, which were produced from a polyamide moulding compound according to one of the preceding claims.

13. Use of a polyamide moulding compound according to one of the claims 1 to 10 or of a moulded article according to claim 12 for components with increased temperature requirements up to 230°C, in particular for automobile components for use close to the engine, such as charge cooling side parts, suction systems, oil sumps, injection nozzles.

## Revendications

1. Mélange à mouler de polyamides, présentant la composition suivante :
(a) 20 à 99 % en poids d'au moins un polyamide choisi dans le groupe consistant en PA 6 , PA 4.6 ; PA 6.6 ; PA 6.6/6 ; PA 6.10 ; PA 6.12 ; PA 10;10 ; PA 11 ; PA 12 ; PA MXD.6 ; PA MXD.10 ; PA MACM 12 ; PA PACM 12 ; PA 6.T/6.I ; PA 6.T/6.6 ; PA 6.T/6.12 ; PA 6.T/10.12 ; PA 4.T ; PA 9.T ; PA 10.T ; PA 12.T ; PA 10/6.T ; PA 6.T/6.I/6.6 ; PA11/10.T ; PA 12/10.T ; PA 6.10/10.T ; PA 6.12/10T ; PA 10.10/10T ; PA 10.12/10.T; PA 12.12/10T; PA 11/10.T/12; PA 11/10.T/6; PA 12/10.T/6; PA 11/10.T/10.I ; PA 11/10.T/10.6 ; PA 12/10.T/10.I ; PA 12/10.T/10.6 ; PA 6.T/MPMD ; (PAMPMDT = polyamide constitué d'un mélange d'hexaméthylènediamine et de 2-méthylpentaméthyldiamine en tant que composant diamine et d'acide téréphtalique en tant que composant diacide) ; les polyamides dont le composant diamine est PACM, MACM, CHDA (CHDA = cyclohexyldiamine) ou TMDC (TMDC = tétraméthyl-Dicykan) et/ou leurs mélanges ou mélanges mécaniques,
(b) 0,05 à 5 % en poids de nigrosine,
(c) 0,005 à 0,5 % en poids d'au moins un agent de nucléation choisi dans le groupe consistant en les agents de nucléation à base de PA 2.2, de kaolinite et de stéatite,
(d) 0 à 79,945 % en poids d'au moins un additif ou produit d'addition sans effet d'agent de nucléation,
la somme de teneurs en les composants (a) à (d) étant de 100 % en poids par rapport au mélange à mouler de polyamides, et le noir de carbone n'étant pas un constituant du mélange à mouler de polyamides.

2. Mélange à mouler de polyamides selon la revendication 1, **caractérisé en ce que** le polyamide (a) est un mélange de PA 6 et de PA 66, ou de PA 6 et de polyphtalamide.

3. Mélange à mouler de polyamides selon la revendication 1, **caractérisé en ce que** le polyamide (a) contient 0,4 à 16 % en poids, de préférence 0,5 à 14 % en poids et d'une manière particulièrement préférée 0,6 à 13 % en poids de PA 6.

4. Mélange à mouler de polyamides selon l'une des revendications précédentes, **caractérisé en ce qu'**il contient la nigrosine (b) en une quantité de 0,08 à 4 % en poids, de préférence de 0,1 à 2 % en poids et d'une manière particulièrement préférée de 0,2 à 1,5 % en poids.

5. Mélange à mouler de polyamides selon l'une des revendications précédentes, **caractérisé en ce qu'**il contient l'au moins un agent de nucléation (c) en une quantité de 0,01 à 0,5 % en poids et de préférence de 0,05 à 0,5 % en poids.

6. Mélange à mouler de polyamides selon l'une des revendications précédentes, **caractérisé en ce que** l'au moins un additif ou produit d'addition (d) est choisi dans le groupe consistant en les fibres de verre, les billes de verre, les fibres de carbone, les poudres minérales, les stabilisants UV ; les stabilisants thermiques, en particulier les sels métalliques, les antioxydants phénoliques ; les antioxydants aminés ; les phosphites ; les phosphonites ; et/ou les mélanges de ceux-ci, un mélange constitué d'un mélange d'iodure de cuivre(I) et d'iodure de potassium étant particulièrement préféré, et un antioxydant aminé et un mélange d'iodure de cuivre(I) et d'iodure de potassium étant particulièrement préférés ; les lubrifiants et agents de démoulage ; les modifiants choc, et les mélanges de ceux-ci.

7. Mélange à mouler de polyamides selon l'une des revendications précédentes, **caractérisé en ce qu'**il contient l'au moins un additif (d) en une quantité de 1,0 à 79,945 % en poids, de préférence de 5 à 70 % en poids et d'une manière particulièrement préférée de 15 à 65% en poids.

8. Mélange à mouler de polyamides selon l'une des revendications précédentes, présentant la composition suivante :
(a1) 0,4 à 14 % en poids de PA 6
(a2) 26 à 97 % en poids de PA 66 ou d'un polyphtalamide
(b) 0,4 à 2 % en poids de nigrosine
(c) 0,1 à 0,5 % en poids d'au moins un agent de nucléation choisi dans le groupe consistant en les agents de nucléation à base de PA 2.2, de kaolinite et de stéatite,
(d) 0,1 à 73,1 % en poids d'un additif ou agent d'addition sans effet d'agent de nucléation ;
la somme des teneurs en les composants (a) à (d) étant de 100 % en poids par rapport au mélange à mouler de polyamides, le noir de carbone n'étant pas un constituant du mélange à mouler de polyamides.

9. Mélange à mouler de polyamides selon l'une des revendications précédentes, **caractérisé en ce que** le polyamide est aliphatique et présente après 2000 h de stockage à chaud à 230 °C une résistance à la traction, déterminée selon ISO 527, d'au moins 60 %, de préférence d'au moins 65 % et d'une manière particulièrement préférée d'au moins 72 % par rapport à la valeur déterminée selon ISO 527 de la résistance à la traction avant stockage à chaud, et/ou présente après 2000 h de stockage à chaud à 230 °C un allongement à la rupture par traction, déterminée selon ISO 527, d'au moins 50 %, de préférence d'au moins 55 % et d'une manière particulièrement préférée d'au moins 58 % par rapport à la valeur déterminée selon ISO 527 de l'allongement à la rupture par traction avant le stockage à chaud.

10. Mélange à mouler de polyamides selon l'une des revendications 1 à 2 et 4 à 8, **caractérisé en ce que** le polyamide est partiellement aromatique et présente après 3000 h de stockage à chaud à 180 °C une résistance à la traction, déterminée selon ISO 527, d'au moins 69 % par rapport à la valeur déterminée selon ISO 527 de la résistance à la traction avant stockage à chaud, et/ou présente après 3000 h de stockage à chaud à 180 °C un allongement à la rupture par traction, déterminée selon ISO 527, d'au moins 63 %, de préférence d'au moins 67 % et d'une manière particulièrement préférée d'au moins 70 %, par rapport à la valeur déterminée selon ISO 527 de l'allongement à la rupture par traction avant le stockage à chaud.

11. Procédé de fabrication d'objets moulés, en particulier de pièces pour automobiles pour une utilisation proche du moteur, à partir d'un mélange à mouler de polyamides, **caractérisé en ce qu'**on soumet à une extrusion ou à un moulage par injection un mélange à mouler de polyamides selon l'une des revendications 1 à 10.

12. Objet moulé destiné à des pièces soumises à des contraintes élevées de température jusqu'à 230 °C, en particulier des pièces pour automobiles destinées à une utilisation proche du moteur, fabriqué à partir d'un mélange à mouler de polyamides selon l'une des revendications précédentes.

13. Utilisation d'un mélange à mouler de polyamides selon l'une des revendications 1 à 10 ou d'un objet moulé selon la revendication 12 pour des pièces soumises à des contraintes thermiques élevées jusqu'à 230 °C, en particulier pour des pièces pour automobiles destinées à une utilisation proche du moteur, telles que des pièces latérales de refroidisseur d'air de suralimentation, des systèmes d'admission, des carters d'huile, des injecteurs.
